# EUROPÄISCHE PATENTSCHRIFT

(11) **EP 0 756 981 B1**
(45) Veröffentlichungstag und Bekanntmachung des Hinweises auf die Patenterteilung: **24.10.2001**
(21) Anmeldenummer: 96102819.8
(22) Anmeldetag: 26.02.1996
(51) Int. Cl.: B62D 3/12, B60G 7/02, B62D 7/20

(54) **Vorderachse für ein Kraftfahrzeug**
Front axle for a motor vehicle
Essieu avant pour un véhicule à moteur

(30) Priorität: 02.08.1995 DE 19528431
(43) Veröffentlichungstag der Anmeldung: 05.02.1997
(73) Patentinhaber: Bayerische Motoren Werke Aktiengesellschaft, 80788 München (DE)
(72) Erfinder: Ertlmaier, Stephan, 80634 München (DE); Müller, Rudolf, 85221 Dachau (DE)

(56) Entgegenhaltungen:
- EP-A- 0 143 558
- PATENT ABSTRACTS OF JAPAN vol. 010, no. 211 (M-501), 24.Juli 1986 & JP-A-61 050808 (DAIHATSU MOTOR CO LTD), 13.März 1986,

## Beschreibung

Die Erfindung betrifft eine Vorderachse für ein Kraftfahrzeug nach dem Oberbegriff des Anspruchs 1.

Insbesondere Kraftfahrzeuge mit Frontantrieb weisen gattungsgemäße Vorderachsen auf, in der Regel mit einem hinter der Radmitte der Vorderräder angeordneten Lenkgetriebe. Ist das Lenkgetriebe starr am Fahrzeugaufbau befestigt, so ergibt sich aufgrund der zwangsläufig vorhandenen Elastizitäten in der Radaufhängung unter der Wirkung einer Seitenkraft eine Vorspurzunahme, was zu einer Übersteuerungstendenz der Vorderachse und zu einem "spitzen Anlenkverhalten" des Kraftfahrzeuges führt. Beide Erscheinungen sind jedoch im Sinne eines neutralen und sicheren Fahrverhalten des Kraftfahrzeuges unerwünscht.

Aus diesem Grund werden Lenkgetriebe gattungsgemäßer Vorderachsen häufig elastisch gelagert. Da das Lenkgetriebe über die Spurstangen mit den Lenkem der Radaufhängung verbunden ist, können die aus der Seitenkraft resultierenden elastischen Verschiebungen der Lenker genutzt werden, um über die Spurstangen das Lenkgetriebe mit zu verschieben und damit eine Veränderung des Lenktrapezes zu verhindern. Da gerade bei kleineren und leichteren Fahrzeugen die für die Verschiebung des Lenkgetriebes in Fahrzeugquerrichtung nutzbaren Spurstangendruckkräfte sehr niedrig sind, muß das Lenkgetriebe entsprechend weich gelagert werden, um die gewünschten Verschiebewege zu erreichen. Die weiche Lenkgetriebelagerung führt jedoch auch zu unerwünschten Verschiebungen z. B. in Fahrzeuglängsrichtung und zu einem unpräzisen Lenkgefühl.

Des Weiteren ist aus der DE-OS 23 30 229 und der EP-A-0 143 598 eine Vorderachse bekannt, bei der die beschriebene Verschiebung des Lenkgetriebes dadurch erreicht wird, dass das Lenkgetriebe an einem Vorderachsträger befestigt ist, der seinerseits elastisch an den Fahrzeugaufbau angebunden ist und über die Lenker unter Seitenkraft verschoben oder verdreht wird. Die oben beschriebene Kompensation des Lenktrapezes wird also durch die mittelbare Verlagerung des Lenkgetriebes zusammen mit dem Vorderachsträger erzielt.

Nachteilig bei der Vorderachse gemäß der DE-OS 23 30 229 und der EP-A-0 143 558 ist es, dass ein eigener Vorderachsträger erforderlich ist, der kostenintensiv in der Herstellung und Montage ist. Gerade bei Frontantriebsfahrzeugen der unteren Preiskategorien wird einer derartige Achskonstruktion aus Kosten- und Gewichtsgründen in der Regel nicht realisiert.

Ausgehend von dem erstgenannten Stand der Technik ist es Aufgabe der Erfindung, eine Vorderachse bereitzustellen, bei der mit einfachen Mitteln ein Übersteuern unter Seitenkraft verhindert wird, ohne den Nachteil einer zu weichen Aufhängung des Lenkgetriebes.

Diese Aufgabe wird durch die Merkmale des Anspruchs 1 gelöst.
Kerngedanke ist es dabei, das Lenkgetriebe direkt am Fahrzeugaufbau zu befestigen und die Verlagerung des Lenkgetriebes mit eigens hierfür vorgesehenen Druckstreben zu bewirken. Diese Druckstreben greifen direkt an den Lenkern oder im Bereich der Lenker der Radaufhängung an und können damit die Seitenkräfte und die daraus resultierende Verschiebung der Lenker unmittelbar an das Lenkgetriebe weiterleiten. Es ist damit im Unterschied zum Stand der Technik ein eigenes Bauteil vorgesehen, dem die Aufgabe "Verschiebung des Lenkgetriebes" zukommt. Dieses Bauteil kann sehr einfach aufgebaut sein und verursacht dadurch nur geringe Mehrkosten. Die Druckstreben sind vornehmlich in Fahrzeugquerrichtung ausgerichtet, entsprechen der gewünschten Verschieberichtung. In der Regel muss mit den Druckstreben ein geringer Höhen- und/oder Längsversatz zwischen den Lenkern und dem Lenkgetriebe ausgeglichen werden.

Erfindungsgemäße Vorderachsen zeichnen sich durch folgende Vorteile gegenüber den bekannten, oben beschriebenen Vorderachsen aus:
Durch den erfindungsgemäßen Einsatz von Druckstreben ist eine um den Faktor fünf bis zehn höhere Krafteinleitung gegenüber der Krafteinleitung über die Spurstangen möglich. Dies hat seinen Grund darin, daß Spurstangen möglichst kraftfrei bleiben sollten, um Rückmeldungen über Fahrbahnunebenheiten an das Lenkrad nach Möglichkeit zu unterdrücken. Außerdem verlaufen Spurstangen bei hintenliegenden Lenkgetrieben nicht in der vertikalen Ebene der Seitenkrafteinleitung, so daß eine direkte Kraftübertragung in einer Ebene nicht möglich ist.
Aufgrund der direkten Krafteinleitung gemäß der Erfindung kann die Lagerung des Lenkgetriebes am Fahrzeugaufbau entsprechend steif ausgebildet werden, wodurch eine hohe Lenkpräzision erreicht wird. Unerwünschte Vorspuränderungen in Richtung einer Übersteuerungstendenz infolge von Seitenkraft aus Kurvenfahrt und einseitiger Brems- oder Antriebskraft werden durch die erfindungsgemäße Vorderachse zuverlässig kompensiert. Durch die elastische Anbindung des Lenkgetriebes an den Fahrzeugaufbau erfolgt zudem eine akustische Entkopplung des Lenkgetriebes, was insbesondere wegen der gängigen Anordnung des Lenkgetriebes im Stirnwandbereich des Kraftfahrzeuges aus akustischen Gründen sehr vorteilhaft ist.
Ein weiterer Vorteil ergibt sich daraus, daß im Gegensatz zu der aufwendigen Lösung gemäß der DE-OS 23 30 229 und der EP-A-0 143 558 die konventionelle Anordnung des Lenkgetriebes im Prinzip erhalten bleibt. Durch den Verzicht auf einen eigenen Vorderachsträger ist die erfindungsgemäße Vorderachse deutlich einfacher im Aufbau und damit billiger in Herstellung und Montage. Gleichzeitig ergeben sich keinerlei Funktionsnachteile. Damit kann die erfindungsgemäße Vorderachse auch bei Fahrzeugen unterer Preiskategorien mit großem Vorteil eingesetzt werden, da sie in ihren positiven Auswirkungen auf das Fahrverhalten des Kraftfahrzeugs der aus der DE-OS bekannten aufwendigen Lösung gleichwertig ist.

Kraftfahrzeuge mit einer in Fahrzeugquerrichtung bauartbedingten relativ elastischen Querlenker-Anbindung eignen sich in besonderer Weise für den Einsatz der erfindungsgemäßen Vorderachse. Fahrzeug-Längsträger nach Anspruch 2, wie z. B. die Motorlängsträger sind in begrenztem Maß querelastisch, bedingt durch den bei Frontantriebsfahrzeugen in der Regel vorhandenen Höhenversatz zwischen der Krafteinleitungsstelle und dem hohen Motorträgerverlauf. Mit der Anbindung der Druckstrebe an den Fahrzeuglängsträger im Bereich der Lenkeranbindung wird der ansonsten nachteilige Effekt der elastischen Verformung des Längsträgers genutzt, um damit gleichzeitig auch die Druckstrebe in Fahrzeugquerrichtung zu verschieben und eine Kompensation der Verformung des Lenktrapezes zu erreichen.

Anspruch 3 sieht die Anbindung von Lenker und Druckstrebe am Fahrzeugaufbau über ein gemeinsames Zwischenglied vor, das gemäß Anspruch 4 als Lagerbock mit einer Buchse ausgebildet ist. Bei steifen Längsträgern sind gemäß Anspruch 5 elastische Mittel wie beispielsweise eine Buchse aus gummielastischem Material vorgesehen, um unter Seitenkrafteinfluß eine ausreichende Verschiebung der Druckstrebe in Fahrzeugquerrichtung zu erreichen.

Die Druckstrebe ist in der Regel unmittelbar an den Endabschnitt des Lenkers angebunden. Abweichend hiervon ist ebenso möglich, die Druckstrebe in unmittelbarer Nähe der Lenkerlagerung z. B. direkt an den Längsträger des Fahrzeugaufbaus anzubinden.

Die erfindungsgemäße Vorderachse ist gleichermaßen für Fahrzeuge mit Front-oder Heckantrieb einsetzbar. Da heckangetriebene Personenkraftwagen tendenziell ein übersteuerndes Fahrverhalten zeigen, wirkt sich hier die Erfindung besonders vorteilhaft aus.

Die Erfindung und weitere Einzelheiten sind im folgenden anhand von Prinzipdarstellungen und möglicher Ausführungsbeispiele näher erläutert. Es zeigt:
- Figur 1: eine schematische Darstellung einer Vorderachse nach dem Stand der Technik in der Draufsicht,
- Figur 2: eine entsprechende Darstellung einer erfindungsgemäßen Vorderachse,
- Figur 3: eine perspektivische Darstellung eines Ausführungsbeispiels einer erfindungsgemäßen Vorderachse,
- Figur 4: eine in Figur 3 mit A bezeichnete Einzelheit in vergrößerter Schnittdarstellung und
- Figur 5: die Anbindung der rechten Druckstrebe in einer gegenüber Figur 3 vergrößerten Darstellung in der Ansicht von vorne.

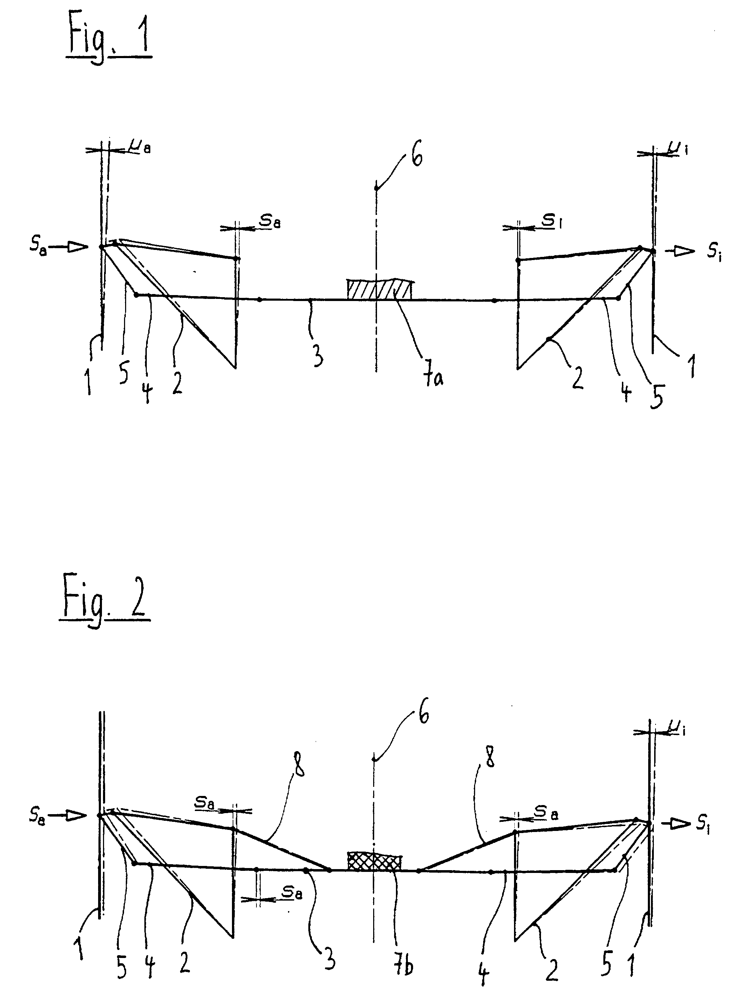

Figur 1 zeigt den schematischen Aufbau einer bekannten Vorderachse, deren Vorderräder 1 über Dreieckslenker 2 am Fahrzeugaufbau geführt sind. Die Lenkung der Vorderräder 1 erfolgt über ein hinter der Radmitte liegendes Lenkgetriebe 3 sowie über Spurstangen 4 und Spurhebel 5.

Bei Kurvenfahrt nach rechts entsteht am kurvenäußeren Vorderrad 1 eine Seitenkraft Sₐ, die eine geringfügige Verschiebung des kurvenäußeren Dreiecklenkers 2 zur mit der Bezugszahl 6 bezeichneten Fahrzeugmitte bewirkt. Da das Lenkgetriebe 3 über die Befestigung 7a starr an den Fahrzeugaufbau angebunden ist, ergibt sich am kurvenäußeren Rad eine Verschiebung des Lenktrapezes um den Betrag sₐ. Hieraus resultiert die in Figur 1 strichpunktiert dargestellte Stellung des Vorderrades 1 unter einem Spurwinkel µₐ, das heißt, es ergibt sich eine deutliche Vorspurzunahme am kurvenäußeren Vorderrad 1. Gleichzeitig bewirkt die Seitenkraft Sᵢ am kurveninneren Vorderrad 1 eine Verschiebung um den Weg sᵢ sowie eine leichte Vorspurabnahme um den Winkel µᵢ. Insgesamt ergibt sich bei Vorderachse gemäß Figur 1 eine deutliche Übersteuertendenz und ein "spitzes Anlenken".

Wird bei der bekannten Vorderachse das Lenkgetriebe elastisch gelagert (in Figur 1 nicht ausgeführt), so kann das Lenkgetriebe 5 unter der Wirkung der Seitenkräfte S_{a,} die über die Spurhebel 5 und die Spurstangen 4 eingeleitet werden, so verschoben werden, daß die Übersteuerungstendenz kompensiert werden kann. Wegen des ungünstigen Krafteinleitungsangriffes sind jedoch die Lenkgetriebelager zur Ausnutzung dieses Effektes sehr weich auszuführen, was Nachteile hinsichtlich des Lenkverhaltens mit sich bringt.

Die in Figur 2 dargestellte Vorderachse weist gegenüber der Vorderachse aus Figur 1 eine elastische Lagerung 7b des Lenkgetriebes 1 sowie zusätzliche Druckstreben 8 auf. Die Druckstreben 8 leiten die über die Vorderräder 1 und die Lenker 2 eingeleitete Seitenkraft an das Lenkgetriebe 3 weiter, das hierdurch um den Weg sₐ verschoben wird. Hierdurch ergibt sich letztendlich keine Vorspuränderung am kurvenäußeren Rad 1, sondern lediglich eine Parallelverschiebung (strichliert dargestellt). Am kurveninneren Rad ergibt sich zugleich eine deutliche Vorspurabnahme um den Winkel µᵢ, wodurch das Fahrverhalten insgesamt deutlich in Richtung untersteuernd beeinflußt wird.

Die Erfindung kann in analoger Weise auch bei Fahrzeugen mit vor der Radmitte liegender Lenkung angewandt werden. Aufgrund der umgekehrten Verhältnisse ist für diesen Fall jedoch zusätzlich ein Mechanismus, beispielsweise in Form eines Umlenkhebels, vorzusehen, um durch eine Verschiebung des Lenkgetriebes eine Vorspurkompensation zu erreichen.

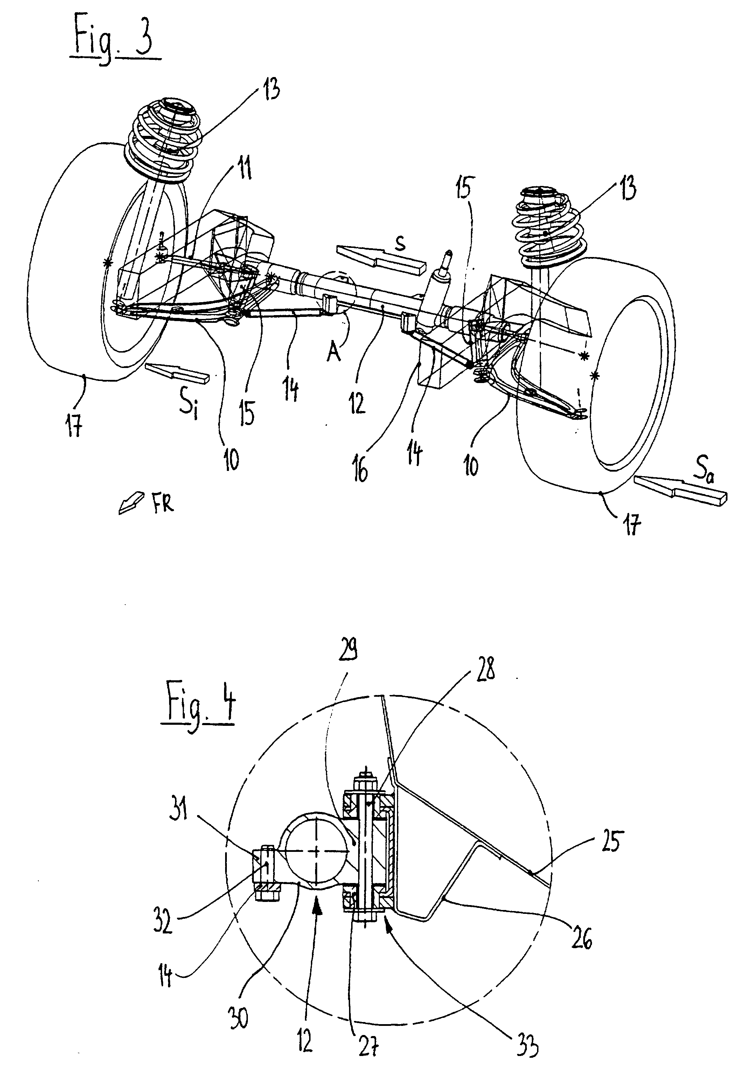

Figur 3 zeigt ein mögliches Ausführungsbeispiel einer erfindungsgemäßen Vorderachse in der Ansicht entgegen der Fahrtrichtung FR. Die Vorderachse weist unter anderem Dreieckslenker 10, Spurstangen 11, ein Lenkgetriebe 12, Federbeine 13 sowie Druckstreben 14 auf. Die Dreieckslenker 10 und mit ihnen auch die Druckstreben 14 sind über Buchsen 15 an den Motorlängsträgern 16 angeordnet. Die an den Vorderrädern 17 angreifenden Seitenkräfte Sₐ und Sᵢ bewirken die oben beschriebene Verschiebung des Lenkgetriebes 12 um den Weg s in Fahrzeugquerrichtung.

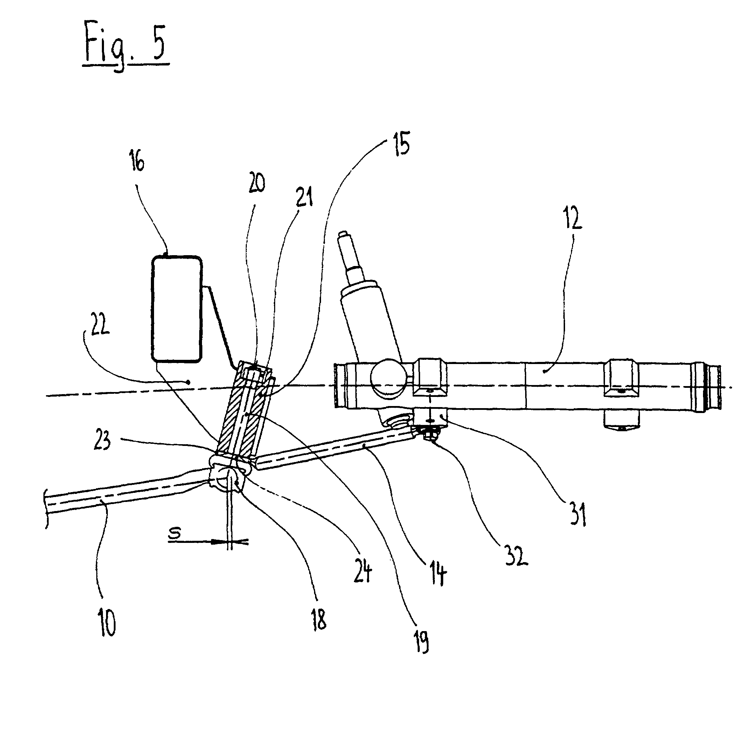

Figur 4 zeigt die Befestigung des Lenkgetriebes 12 an der Stirnwand 25 des Kraftfahrzeuges im Detail. Ein an die Stirnwand 25 angeschweißter Halter 26 nimmt ein Befestigungselement 33 (mit einem Gummielement 27 und einer Befestigungsschraube 28) auf. Die Schraube 28 durchsetzt einen Befestigungsflansch 29 am Gehäuse 30 des Lenkgetriebes 12. Auf der stirnwandabgewandten Seite des Gehäuses 30 ist ein weiterer Flansch 31 vorgesehen, an dem über eine Schraube 32 die Druckstrebe 14 befestigt ist. Das Gummielement 27 des Befestigungselements 33 kann relativ hart ausgeführt sein, da am Lenkgetriebe 12 bereits ein Verschiebeweg s von ca. +/- 1 mm ausreicht, um die maximalen, unter Seitenkrafteinfluß auftretenden Spurabweichungen von ca. +/- 0,5 ° zu kompensieren.

Figur 5 zeigt einen Teilabschnitt der erfindungsgemäßen Vorderachse. Der radabgewandte Endabschnitt des Dreieckslenkers 10 ist als Kugelgelenk 18 ausgebildet, mit einem schräg aufwärts abstehenden Zapfen 19. Der Zapfen 19 ist in die Buchse 15 eingesetzt und mit seinem endseitigen Gewindeabschnitt 20 über eine Mutter 21 in der Buchse 15 fixiert. Die Buchse 15 ist über einen Lagerbock 22 am Längsträger 16 angeschweißt. Der Lagerbock 22 gleicht den Höhenversatz zwischen dem Lenker 10 und dem Längsträger 16 aus. Zwischen dem Kugelgelenk 18 und der unteren Stirnfläche der Buchse 15 ist die Druckstrebe 14 an ihrem lenkgetriebeabgewandten Endabschnitt, der als Scheibe 23 ausgebildet ist, fest eingespannt. Der Kegelsitz 24 des Kugelgelenks 18 sorgt für eine spielfreie Übertragung der Querbewegungen des Dreieckslenkers 10 auf die Druckstrebe 14, die über die Schraube 32 am Flansch 31 des Lenkgetriebes 12 befestigt ist. Somit bewirkt die elastische Verformung von Längsträger 16 und/oder Lagerbock 22 unter Seitenkrafteinfluß eine Verschiebung s der Querstrebe 14 und damit des Lenkgetriebes 12.

## Patentansprüche

1. Vorderachse für ein Kraftfahrzeug, mit
- unabhängig über Lenker am Fahrzeugaufbau geführten Vorderrädern,
- einem auf die Vorderräder wirkenden Lenkgetriebe, das über elastische Elemente am Fahrzeugaufbau befestigt ist und
- einer Einrichtung, die bei einer auf die Vorderräder wirkenden Seitenkraft eine Verlagerung des Lenkgetriebes in Fahrzeugquerrichtung erzeugt, derart, dass die Vorderräder unter Seitenkraft in untersteuernder Tendenz verschwenkt werden,
**dadurch gekennzeichnet, dass**
zwischen dem Lenkgetriebe (3, 12) einerseits und den radabgewandten Endabschnitten der Lenker (2, 10) andererseits jeweils wenigstens eine Druckstrebe (8, 14) vorgesehen ist, die eine seitenkraftbedingte Querverlagerung des Lenkers (2, 10) direkt auf das Lenkgetriebe (3, 12) überträgt.

2. Vorderachse nach Anspruch 1,
**dadurch gekennzeichnet, dass** der radabgewandte Endabschnitt des Lenkers (2, 10) an einem Längsträger (16) des Fahrzeugaufbaus angelenkt ist.

3. Vorderachse nach Anspruch 1 und/oder 2,
**dadurch gekennzeichnet, daß** sowohl der radabgewandte Endabschnitt des Lenkers (10) als auch der lenkgetriebeabgewandte Endabschnitt der Druckstrebe (14) an einem am Fahrzeugaufbau (16) angeordneten Zwischenglied (19) angreifen.

4. Vorderachse nach Anspruch 3,
**dadurch gekennzeichnet, daß** das Zwischenglied (19) als ein am Längsträger (16) angeordneter Lagerbock (22) mit einer Lagerbuchse (15) ausgebildet ist.

5. Vorderachse nach Anspruch 3 und/oder 4,
**dadurch gekennzeichnet, daß** eine Lagerbuchse mit gummielastischem Material vorgesehen ist.

## Claims

1. A front axle for a motor vehicle comprising
- front wheels independently guided via control levers on the vehicle body,
- a steering mechanism acting on the front wheels and fastened to the body by resilient elements and
- a device which, if a lateral force acts on the front wheels, displaces the steering mechanism in the transverse direction of the vehicle so that the front wheels are pivoted by the lateral force in the understeering direction,
**characterised in that**
between the steering mechanism (3, 12) on the one hand and the end portions of the control levers (2,10) remote from the wheel on the other hand, at least one pressure strut (8, 14) is provided in each case, whereby transverse displacement of the control lever (2, 10) caused by a lateral force is directly transmitted to the steering mechanism (3, 12).

2. A front axle according to claim 1, **characterised in that** the end portion of the control lever (2, 10) remote from the wheels is pivoted to a longitudinal member (16) of the vehicle body.

3. A front axle according to claim 1 and/or 2, **characterised in that** both the end portion of the control lever (10) remote from the wheels and the end portion of the pressure strut (14) remote from the steering mechanism engage an intermediate member (19) mounted on the vehicle body (16).

4. A front axle according to claim 3, **characterised in that** the intermediate member (19) is a bearing block (22) and bearing bush (15) mounted on the longitudinal member (16).

5. A front axle according to claim 3 and/or 4, **characterised in that** a bearing bush comprising elastomeric material is provided.

## Revendications

1. Essieu avant pour un véhicule à moteur, comprenant :
- des roues avant indépendantes, montées par des bras sur la structure du véhicule,
- un mécanisme de direction agissant sur les roues avant et fixé par des éléments élastiques sur la structure du véhicule,
- un dispositif qui produit, quand une force latérale s'exerce sur les roues avant, un déplacement du mécanisme de direction transversalement au véhicule, de manière que les roues avant pivotent avec tendance au sous virage,
**caractérisé en ce qu'**
entre le mécanisme de direction (3, 12) d'une part et les extrémités, éloignées des roues, des bras de suspension (2, 10) d'autre part, il est prévu de chaque côté une barre de poussée (8, 14) qui transmet directement au mécanisme de direction (3, 12) un décalage latéral du bras de suspension (2, 10) provoqué par une force latérale.

2. Essieu avant selon la revendication 1,
**caractérisé en ce que**
l'extrémité, éloignée de la roue, du bras (2, 10) est articulée à un longeron porteur (16) de la structure du véhicule.

3. Essieu avant selon la revendication 1 et/ou 2,
**caractérisé en ce que**
l'extrémité, éloignée de la roue, du bras (10) et l'extrémité, éloignée du mécanisme de direction, de la barre de poussée (14) sont toutes deux en prise avec un organe intermédiaire (19) monté sur la structure du véhicule.

4. Essieu avant selon la revendication 3,
**caractérisé en ce que**
l'organe intermédiaire (19) est constitué par une chaise porteuse (22) montée sur le longeron (16) et équipée d'une douille de palier (15).

5. Essieu avant selon les revendications 3 et/ou 4,
**caractérisé en ce que**
la douille de palier est faite d'un matériau élastique tel que du caoutchouc.
